# EUROPÄISCHE PATENTSCHRIFT

(11) **EP 2 154 347 B1**
(45) Veröffentlichungstag und Bekanntmachung des Hinweises auf die Patenterteilung: **28.03.2018**
(21) Anmeldenummer: 09166791.5
(22) Anmeldetag: 30.07.2009
(51) Int. Cl.: F02B 29/04, F02M 31/20, B60H 1/00

(54) **Vorrichtung zur Temperierung der Ansaugluft eines Verbrennungsmotors**
Device for tempering the intake air of a combustion engine
Dispositif d'équilibrage des températures de l'air d'aspiration d'un moteur à combustion

(30) Priorität: 12.08.2008 DE 102008038627
(43) Veröffentlichungstag der Anmeldung: 17.02.2010
(73) Patentinhaber: MAHLE Behr GmbH & Co. KG, 70469 Stuttgart (DE)
(72) Erfinder: Schäfer, Bernd, 70176 Stuttgart (DE); Strauß, Thomas, 73274 Notzingen (DE)
(74) Vertreter: Grauel, Andreas

(56) Entgegenhaltungen:
- EP-A2- 1 342 893
- EP-A2- 1 911 946
- EP-A2- 1 983 170
- DE-A1- 10 254 016
- DE-C1- 10 156 310

## Beschreibung

Um zukünftige Abgasnormen, wie zum Beispiel die EURO-5-Norm für Diesel-PKWs zu erreichen, ist eine Senkung der Emissionen bei HC, NOx und Partikeln gefordert. Um dieses Ziel zu erreichen, wird zunehmend ein Ansauglufttemperatur-Management erforderlich, um die Ansauglufttemperatur weiter als bisher abzusenken oder, als neue Anforderung, die Ansauglufttemperatur anzuheben.

Eine Anhebung der Ansauglufttemperatur dient zur Unterstützung der Abgasbehandlung, zur Sicherung der Funktion des Oxidationskatalysators oder zur Regeneration des Diesel-Partikelfilters. Eine zyklische Anhebung der Ansauglufttemperatur erhöht die Verbrennungs- und Abgastemperatur und ist somit auch für die Verbrennung des gespeicherten Rußes im Partikelfilter wichtig.

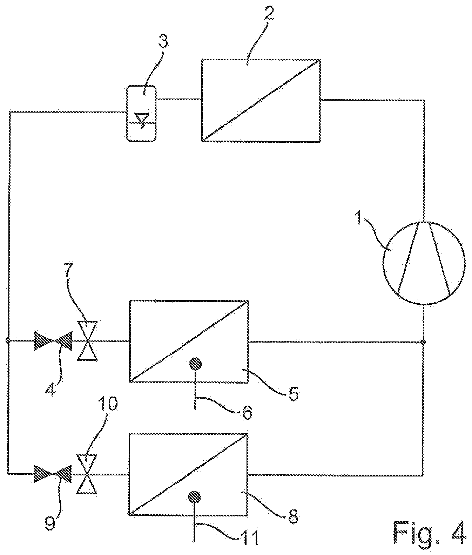

Eine weitere Absenkung der Ansauglufttemperierung kann durch eine optimierte Ladeluftkühlung, verbesserte Wärmeübertrager oder ein verbessertes System (direkt oder indirekt) erreicht werden. Weiter ist eine Ladeluftunterkühlung mittels Abkühlung der Ansaugluft über einen CAS-Verdampfer (CAS = Charged Air Subcooling = Ladeluftunterkühlung), der vom HVAC-Kältekreislauf (HVAC = Heating, Ventilation, Air Conditioning = Heizen, Belüften, Kühlen) bedient wird, bekannt. Eine schematische Prinzipskizze eines HVAC-Kältekreislaufs mit einem CAS-Verdampfer ist in Figur 4 dargestellt. Dabei ist in einem Kältemittelkreislauf-System ein Verdichter 1 vorgesehen, der ein Kältemittel verdichtet und einem Kondensator 2 zuführt, in welchem das Kältemittel kondensiert. Nachfolgend wird das flüssige Kältemittel in einen Kältemittelsammler 3 geleitet. Vom Kältemittelsammler 3 wird das Kältemittel entweder über ein erstes Expansionsventil 4, ein erstes Abstellventil 7 sowie einen (CAS)-Verdampfer 5 dem Verdichter 1 zugeführt. Über den Verdampfer 5 kann die Ansaugluft eines Verbrennungsmotors für ein Transportmittel (wie beispielsweise ein Fahrzeug, Flugzeug oder Schiff) durch das Verdampfen des Kältemittels abgekühlt werden, wobei die Abkühlung entweder des Kältemittels oder der Ansaugluft über einen Temperatursensor 6 erfasst und geregelt werden kann. Alternativ kann das Kältemittel im Kältemittelsammler 3 über ein zweites Expansionsventil 9, ein zweites Absperrventil 10 und einen Klimaanlagen-Verdampfer 8 wieder dem Verdichter 1 zugeführt werden. Der Klimaanlagen-Verdampfer 8 ist dabei zur Temperierung einer Umgebungsluft einer Fahrgastzelle des Transportmittels vorgesehen. Über einen Ausblasfühler 11 kann eine Temperatur der Umgebungsluft bzw. des Kältemittels erfasst und geregelt werden. In einer Anordnung, wie sie in Figur 4 dargestellt ist, kann somit eine Klimaanlage für das Transportmittel zur Abkühlung der Ansaugluft für den Verbrennungsmotor verwendet werden.

Zur Anhebung der Ansauglufttemperatur, wie sie für das Erreichen von modernen Abgasnormen unter Umständen erforderlich ist, sind Maßnahmen wie eine Unterdrückung der Ladeluft, eine Aufheizung der Ladeluft mittels zusätzlichem W/G-Wärmeübertrager oder der indirekten Ladeluftkühlung bekannt.

Die im Stand der Technik bekannten Ansätze weisen jedoch den Nachteil auf, dass oftmals die Verwendung von Motorabwärme an einer anderen Stelle fehlt und somit beispielsweise der Komfort im Innenraum der Passagierzelle beeinträchtigt wird. Dieses Wärmedefizit muss anderweitig ausgeglichen werden, beispielsweise durch zusätzliche Wärmeübertrager (wie einem PTC-Zuheizer) und verursacht in den meisten Fällen einen zusätzlichen Kraftstoffverbrauch.
Die EP 1 983 170 A2 offenbart eine Vorrichtung gemäß dem Oberbegriff von Anspruch 1.
Die EP 1 342 893 A2 offenbart eine Vorrichtung zur Kühlung von Ladeluft bei einem Kraftfahrzeug.
Es ist daher die Aufgabe der vorliegenden Erfindung, eine gegenüber dem Stand der Technik bessere und kostengünstigere Möglichkeit zur Aufheizung der Ansaugluft für einen Verbrennungsmotor zu schaffen.
Diese Aufgabe wird durch eine Vorrichtung mit den Merkmalen des Anspruchs 1 gelöst. Weitere Ausführungsformen der Erfindung ergeben sich aus den abhängigen Patentansprüchen.
Die vorliegende Erfindung schafft eine Vorrichtung zur Temperierung der Ansaugluft eines Verbrennungsmotors eines Transportmittels, wobei die Vorrichtung folgende Merkmale umfasst:
- ein Kältemittelkreislauf-System, das einen Klimaanlagen-Verdampfer zum Kühlen oder Erhitzen einer Umgebungsluft für eine Passagierzelle des Transportmittels und ein Expansionsventil zum Expandieren des Kältemittels umfasst;
- einen in dem Kältemittelkreislauf-System angeordneten Verdichter, wobei der Verdichter einen Verdichter-Ausgang zum Abgeben von hoch-verdichtetem Kältemittel und einen Verdichter-Eingang zum Aufnehmen von niedrig-verdichtetem Kältemittel aufweist;
- einen in dem Kältemittelkreislauf-System angeordneten Verdampfer, der ausgebildet ist, um die Ansaugluft des Verbrennungsmotors zu temperieren, wobei der Verdampfer einen Verdampfer-Eingang zum Aufnehmen des Kältemittels und einen Verdampfer-Ausgang zum Abgeben des Kältemittels aufweist und
wobei in dem Kältemittelkreislauf-System der Verdampfer-Eingang mit dem Verdichter-Ausgang und der Verdampfer-Ausgang über den Klimaanlagen-Verdampfer mit dem Verdichter-Eingang verbindbar ist, oder
wobei in dem Kältemittelkreislauf-System der Verdampfer-Eingang mit dem Verdichter-Ausgang und der Verdampfer-Ausgang über ein Expansionsventil mit dem Verdichter-Eingang verbindbar sind,
wobei
zwischen dem Verdichter und einem Kondensator, der stromabwärts des Verdichter-Ausgangs angeordnet ist, ein erstes Umschaltventil und zwischen Verdampfer und Verdichter ein zweites Umschaltventil angeordnet sind, wobei das erste Umschaltventil einen Kältemittelfluss entweder vom Verdichter zum Kondensator oder vom Verdichter über ein erstes Rückschlagventil zu einem Eingang des Verdampfers ermöglicht und das zweite Umschaltventil entweder einen Kältemittelfluss vom Verdampfer zum Verdichter oder vom Ausgang des Verdampfers über ein zweites Rückschlagventil zum Eingang des Kondensator ermöglicht.

Die vorliegende Erfindung basiert auf der Erkenntnis, dass durch einfache Umkonfiguration des Kältemittelflusses im Kältemittelkreislauf-System der Verdampfer auch als Heizer betrieben werden kann. In diesem Fall wird der Verdampfer mit dem Hochdruck-Ausgang des Verdichters verbunden, so dass am Verdampfer durch das hoch-komprimierte Kältemittel die höchsten Kältemitteltemperaturen vorliegen. Im Verdampfer kühlt das Kältemittel ab und gibt die Wärme an die Ansaugluft des Verbrennungsmotors ab. Dadurch, dass der Verdampfer erfindungsgemäß vor dem Klimaanlagen-Verdampfer angeordnet ist (oder gar in einem Kältemittelkreislaufzweig angeordnet ist, der einem Kondensator und den Klimaanlagen-Verdampfer aufweist und der dem Verdampfer parallelgeschaltet ist), können deutlich höhere Lufttemperaturen der Ansaugluft erreicht werden, als dies durch die herkömmliche Verschaltung möglich wäre. Die "Umleitung" des Kältemittels in das Kältemittelkreislauf-System erfordert dabei lediglich einfache konstruktive Veränderungen.

Die vorliegende Erfindung bietet den Vorteil, dass durch oftmals bereits vorhandene Klimaanlagen in Transportmitteln diese zugleich zur Anheizung der Ansaugluft des Verbrennungsmotors verwendet werden können. Ein separates Heizmittel muss daher nicht vorgesehen werden. Auf diese Weise wird nicht nur eine schnelle Aufheizung der Ansaugluft ermöglicht, vielmehr kann auch eine Reduzierung der Emissionen bei reduziertem Kraftstoffmehrverbrauch und somit bei (gegenüber dem Stand der Technik) geringeren Kosten realisiert werden. Zusätzlich können die Herstellungskosten für eine solche Vorrichtung zur Temperierung der Ansaugluft reduziert werden.

In einer vorteilhaften Ausführungsform der vorliegenden Erfindung ist in einem Betriebsmodus der Vorrichtung zur Temperierung ein Kondensator mit dem Verdichter-Eingang verbindbar, der Verdampfer-Eingang mit dem Expansionsventil oder dem Kondensator verbindbar und der Verdampfer-Ausgang mit dem Verdichter-Eingang verbindbar. Eine Verschaltung in einem solchen Betriebsmodus ermöglicht nicht nur einen Betrieb des Verdampfers als Heizer sondern auch als Kühler, so dass die Vorrichtung zur Temperierung in zwei Modi (d.h. Heizen und Kühlen) betreibbar ist. Durch diese einfache Umschaltmöglichkeit ist die vorgeschlagene Vorrichtung sehr flexibel einsetzbar. Der Einsatz von mehreren Geräten für die entsprechenden Betriebsmodi kann dann entfallen.

Günstig ist es auch, wenn gemäß einer weiteren Ausführungsform der Erfindung zwischen dem Verdichter-Ausgang und dem Verdampfer-Eingang ein Rückschlagventil und/oder zwischen dem Verdampfer-Ausgang und dem Kondensator ein Rückschlagventil in dem Kältemittelkreislauf-System angeordnet ist. Dies stellt insbesondere bei dem Einsatz des Verdampfers im Heiz- und Kühlmodus eine korrekte Flussrichtung des Kältemittels im Kältemittelkreislauf-System für den jeweiligen Betriebsmodus sicher, so dass für das Umschalten zwischen den Betriebsmodi lediglich wenige und einfach aufgebaute Umschaltventile in den Kältemittel-Leitungen vorgesehen werden können.

In einer weiteren Ausführungsform der Erfindung kann das Kältemittelkreislauf-System eine Bypass-Leitung um den Klimaanlagen-Verdampfer aufweisen. Hierdurch kann durch eine einfache konstruktive Maßnahme eine zu starke Abkühlung der Umgebungsluft für die Passagierzelle (insbesondere im Winter) vermieden werden, wenn das Kältemittel dann am Klimaanlagen-Verdampfer vorbei zum Verdichter geleitet wird.

Ferner kann auch zwischen dem Verdichter-Ausgang und dem Verdampfer-Eingang ein Absperrventil angeordnet sein. Dies bietet den Vorteil, dass bei einer Parallelschaltung des Verdampfers zu dem Klimaanlagen-Verdampfer oder dem Kondensator die Heizfunktion des Verdampfers abgeschaltet wird. Durch das Vorsehen eines weiteren Absperrventils, das zwischen dem Verdampfer und dem Kondensator angeordnet ist, kann dann auf einfache Weise durch das wechselseitige Öffnen und Schließen dieser beiden Absperrventile der Verdampfer in einem Heiz- bzw. Kühlmodus betrieben werden.

Weiterhin kann auch der Verdichter-Eingang unterbrechungsfrei über den Kondensator mit einem Kältemittelsammler verbunden sein. Dies stellt sicher, dass das Kältemittel des Kältemittelkreislauf-Systems immer über den Kältemittelsammler fließt, so dass ein Kältemittelmanagement, speziell ein Einlagern von aktuell nicht benötigtem Kältemittel, vereinfacht wird.

Weiterhin kann auch in einer anderen Ausführungsform der vorliegenden Erfindung zwischen dem Verdampfer-Ausgang und dem Verdichter-Eingang ein weiteres Expansionsventil angeordnet sein. Eine derartige Ausgestaltung bietet den Vorteil, dass hierdurch der Austrittszustand des Kältemittels und damit indirekt auch der Eintrittszustand des Kältemittels in den Verdichter auf der Taulinie des Verdampfers festgehalten werden.

Gemäß einer günstigen Ausführungsform der Erfindung kann das weitere Expansionsventil eine veränderbare Ventil-Querschnittsfläche aufweisen. Hierdurch ist vorteilhaft eine Möglichkeit gegeben, eine Aufteilung des Kältemittelstroms über den Verdampfer bzw. den Klimaanlagen-Verdampfer einzustellen. Auf diese Weise wird eine Intensität der Heizwirkung des Verdampfers für die Ansaugluft des Verbrennungsmotors einfach einstellbar.

Ferner kann gemäß einer weiteren Ausführungsform der vorliegenden Erfindung zwischen dem Verdampfer-Ausgang und dem weiteren Expansionsventil ein weiterer Kältemittelsammler angeordnet sein. Dies ermöglicht vorteilhaft, dass bei einem Umschalten des Verdampfers in den Kühlbetrieb das Expansionsventil nicht mehr durchströmt wird und sich das im weiteren Kältemittelsammler gesammelte Kältemittel durch die Druckdifferenz selbstständig auf die Niederdruckseite des Verdichters entleert. Auf diese Weise wird auch bei einem Umschalten zwischen dem Heiz- und Kühlmodus vermieden, dass sich Kältemittel in abgesperrten Leitungen ansammelt und für die Funktion des Kältemittelkreislauf-Systems nicht mehr zur Verfügung steht.

Auch kann das Kältemittelkreislauf-System ein Absperrventil umfassen, um einen Kältemittelfluss durch den Klimaanlagen-Verdampfer zu verhindern. Auf diese Weise kann die Vorrichtung zeitweise vollständig zur Temperierung der Ansaugluft verwendet werden, was beispielsweise zum Reinigen eines Diesel-Partikelfilters durch eine kurzzeitige hohe Abgastemperatur vorteilhaft ist.

Besonders günstig ist es auch, wenn der Klimaanlagen-Verdampfer ausgebildet ist, um die Umgebungsluft der Passagierzelle nachzuheizen. In diesem Fall kann insbesondere bei niedrigen Temperaturen im Winter der Innenraumkomfort in der Passagierzelle aufrechterhalten werden, ohne dass auf die Funktion des Verdampfers zur Heizung der Ansaugluft verzichtet werden muss. Die Heizung der Umgebungsluft der Passagierzelle ist dabei jedoch weniger energieintensiv als die Aufheizung der Ansaugluft des Verbrennungsmotors, wodurch auch in dieser Ausführung noch Vorteile gegenüber dem Stand der Technik zu verzeichnen sind.

Auch kann in einer anderen Ausführungsform der Erfindung der Verdampfer ausgebildet sein, um die Ansaugluft unter Verwendung eines Kühlmittels zu temperieren. Durch diese indirekte Möglichkeit zur Heizung oder Kühlung der Ansaugluft des Verbrennungsmotors kann sichergestellt werden, dass durch die Temperierung des Kühlmittels eine gleichmäßige und kontinuierliche Anheizung oder Abkühlung der Ansaugluft (unabhängig von dem jeweils kurzzeitig eingeschalteten Betriebsmodus des Verdampfers) möglich ist. Durch konstante Ansauglufttemperaturen kann eine Verbesserung der Emissionswerte erreicht werden.

Speziell kann auch in einer weiteren Ausführungsform der vorliegenden Erfindung das Kältemittelkreislauf-System ausgebildet sein, um den Kältemittelfluss zyklisch derart zu steuern, dass der Verdampfer in einem Betriebszustand zwischen den Verdichter und den Kondensator geschaltet ist und der Kondensator in einem anderen Betriebszustand zwischen den Verdichter und den Verdampfer geschaltet ist. Diese Umschaltung zwischen den Betriebszuständen ermöglicht, dass auch im Betriebszustand, in dem eine Kühlung der Ansaugluft erfolgt, kurzzeitig eine Erhitzung der Ansaugluft ermöglicht wird, so dass beispielsweise im Partikelfilter gespeicherter Ruß verbrannt werden kann.

Die Erfindung wird nachstehend anhand der beigefügten Zeichnungen beispielhaft näher erläutert. Es zeigt:
- Fig. 1: ein schematisches Blockschaltbild eines ersten Ausführungsbeispiels der vorliegenden Erfindung,
- Fig. 2: ein schematisches Blockschaltbild eines nicht erfindungsgemäßen Beispiels,
- Fig. 3: ein schematisches Blockschaltbild eines nicht erfindungsgemäßen Beispiels, und
- Fig. 4: ein schematisches Blockschaltbild eines Kältemittelkreislauf-Systems.

Gleiche oder ähnliche Elemente werden in den nachfolgenden Figuren der Zeichnungen mit gleichen oder ähnlichen Bezugszeichen versehen, wobei auf eine wiederholte Beschreibung dieser Elemente verzichtet wird. Ferner enthalten die Figuren der Zeichnungen, deren Beschreibung sowie die Ansprüche zahlreiche Merkmale in Kombination. Einem Fachmann ist dabei klar, dass diese Merkmale auch einzeln betrachtet werden können oder sie zu weiteren, hier nicht explizit beschriebenen Kombinationen zusammengefasst werden können.

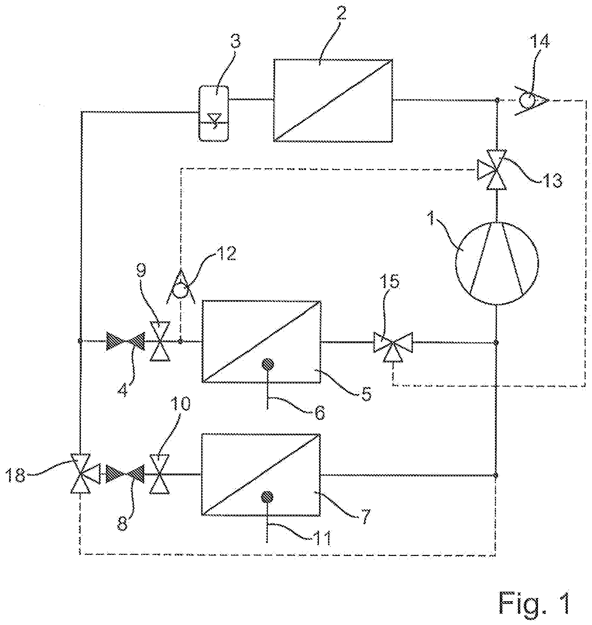

Figur 1 zeigt ein schematisches Blockschaltbild der vorliegenden Erfindung gemäß einem ersten Ausführungsbeispiel. Die Topologie des Kältemittelkreislauf-Systems gemäß Figur 1 entspricht dabei im Wesentlichen der Topologie des in Figur 4 dargestellten Kältemittelkreislauf-Systems, wobei jedoch einige zusätzliche Umschaltmöglichkeiten vorgesehen wurden. Insbesondere ist anzumerken, dass zwischen dem Verdichter 1 und dem Kondensator 2 ein erstes Umschaltventil 13 und zwischen dem Verdampfer 5 und dem Verdichter 1 ein zweites Umschaltventil 15 angeordnet ist. Das erste Umschaltventil 13 ermöglicht einen Kältemittelfluss entweder vom Verdichter 1 zum Kondensator 2 oder vom Verdichter 1 über ein erstes Rückschlagventil 12 zu einem Eingang des Verdampfers 5. Das zweite Umschlagventil 15 ermöglicht entweder einen Kältemittelfluss vom Verdampfer 5 zum Verdichter 1 oder vom Ausgang des Verdampfers 5 über ein zweites Rückschlagventil 14 zum Eingang des Kondensators 2. Ferner ist noch ein drittes Umschaltventil 18 vorgesehen, um entweder das Kältemittel über einen Zweig des Kältemittelkreislauf-Systems zu führen, in dem der Klimaanlagen-Verdampfer 7 angeordnet ist, oder das Kältemittel über eine Bypass-Leitung direkt zum Verdichter 1 zurückzuleiten.
In einer Aufheizschaltung ist der (CAS-) Verdampfer 5 (als Heizer) dem Kondensator 2 vorgeschaltet, das heißt das Kältemittel strömt vom Verdichter 1 über das Umschaltventil 13 in den Verdampfer 5 und anschließend über den Kondensator 2 im Kühlmodul und das Expansionsventil 8 in den Klimaanlagen-Verdampfer 7. Von dort strömt es zurück zum (Kältemittel-) Verdichter 1, so dass der Kältemittelkreislauf von vorne beginnt. Das Absperrventil 9 ist geschlossen.
Je nach Stellung der Umschaltventil 13 und 15 ist der Verdampfer 5 im Kühl- oder im Heizbetrieb. Da im Heizbetrieb der Verdampfer 5 dem Kondensator 2 vorgeschaltet ist, liegen hier die höchsten Kältemitteltemperaturen vor. Das Kältemittel kühlt beim Aufheizen der Ansaugluft von der Verdichtungsendtemperatur auf die Kondensationstemperatur ab und fängt dann an zu kondensieren. Die Kondensationstemperatur liegt über der Umgebungstemperatur. Bei dieser Variante strömt immer der gesamte Kältemittelmassenstrom über den Klimaanlagen-Verdampfer 7. Im Winter sollte eventuell die Luft zur Fahrgastzelle nachgeheizt werden, oder alternativ ein kältemittelseitiger Bypass um den Klimaanlagen-Verdampfer 7 mittels des dritten Umschaltventils 18 eingeschaltet werden.

Auch kann der (CAS-) Verdampfer 5 dem Kondensator 2 nachgeschaltet werden, was einen geringeren Zeitverzug beim Erwärmen der Ansaugluft bewirken würde. In einer anderen Ausgestaltung der Erfindung ist die Einbindung 5 zwischen dem Kondensator 2 und dem Kältemittelsammler 3.

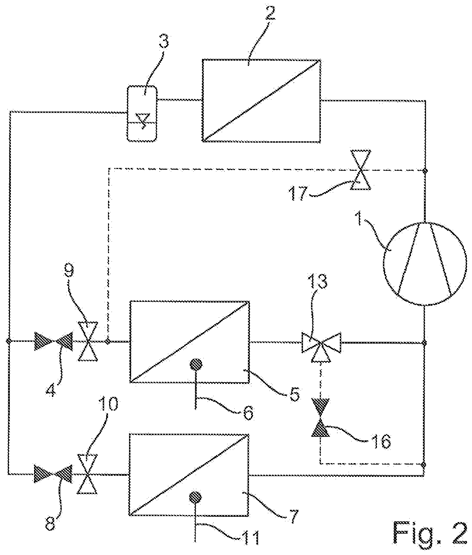

In Figur 2 ist ein schematisches Blockschaltbild eines nicht erfindungsgemäßen Beispiels dargestellt. Die Topologie des Kältemittelkreislauf-Systems entspricht wiederum der Topologie des Kältemittelkreislauf-Systems gemäß Figur 4, wobei jedoch einige andere Veränderungen vorgenommen worden sind. Insbesondere wurde eine Kältemittel-Leitung zwischen dem Ausgang des Verdichters 1 und dem Eingang des Verdampfers 5 vorgesehen, wobei ein Kältemittelfluss durch diese Kältemittel-Leitung unter Verwendung des weiteren Absperrventils 17 verhindert werden kann. Zusätzlich ist am Ausgang des Verdampfers 5 ein Umschaltventil 13 vorgesehen, über welches einerseits das Kältemittel direkt an den Eingang des Verdichters 1 oder andererseits über ein drittes Expansionsventil 16 dem Eingang des Verdichters 1 zugeführt werden kann. In einer anderen Ausgestaltung der Erfindung ist das dritte Expansionsventil eine Fixdrossel.

In einer Aufheizverschaltung gemäß einer Topologie des Kältemittelkreislauf-Systems nach Figur 2 wird das Kältemittel nach dem Verdichter 1 aufgeteilt. Ein Teilstrom des Kältemittels strömt über den Verdampfer 5 und ein weiterer Teilstrom des Kältemittels strömt über den Kondensator 2. Das Absperrventil 9 ist geschlossen, wogegen das Absperrventil 17 geöffnet ist. Nach dem Verdampfer 5 strömt das Kältemittel über das Expansionsventil 16 zurück zum Verdichter 1. Diese Verschaltung entspricht der eines Dreiecksprozesses.

Die Aufteilung des Kältemittels wird durch die Expansionsventilquerschnitte der Expansionsventile 16 und 8 geregelt. Eventuell kann die Querschnittsfläche des Expansionsventils 16 bzw. 8 veränderbar sein (beispielsweise kann als Expansionsventil ein elektrisch ansteuerbares Expansionsventil gewählt werden). Durch die veränderbare Querschnittsfläche kann die Menge des Kältemittels gesteuert werden, die durch den Verdampfer 5 strömt.

Je nach Bedarf kann der Klimaanlagen-Verdampfer 7 wie gewohnt betrieben werden.

Aus Gründen des Kältemittelmanagements (speziell zum Einlagern von Überschüssen in dem Kältemittelsammler 3) sollte im Dreiecksprozessbetrieb der Kältemittelsammler 3 immer durchströmt werden. Dies bedeutet, dass die abgekühlt für die Luft über dem Klimaanlagen-Verdampfer nachgeheizt werden sollte.

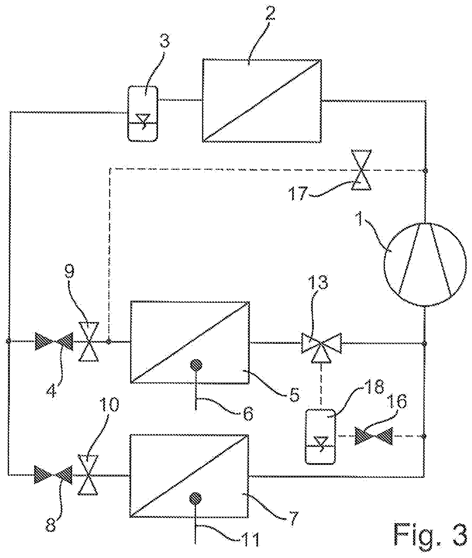

Figur 3 zeigt ein Blockschaltbild eines nicht erfindungsgemäßen Beispiels. Die Topologie des Kältemittelkreislauf-Systems entspricht dabei im Wesentlichen der Topologie des in Figur 2 dargestellten Kältemittelkreislauf-Systems, wobei jedoch zwischen dem Verdampfer 5 und dem weiteren Expansionsventil 16 ein weiterer (in diesem Falle hochdruckseitiger) Kältemittelsammler 18 vorgesehen ist. Beim Betrieb der Vorrichtung gemäß dem in Figur 3 dargestellten Ausführungsbeispiel wird der Austrittszustand des Kältemittels aus dem Verdampfer 5 auf der Taulinie festgehalten und damit indirekt auch an der Eintrittszustand in den Verdichter 1. Bei dieser Variante kann der Klimaanlagen-Verdampfer 7 (beispielsweise durch das Schließen des Zweiten Absperrventils 10) komplett abgesperrt werden. Im Kühlbetrieb des Verdampfers 5 (das heißt wenn das Absperrventil 17 geschlossen und das Expansionsventil 16 nicht durchströmt ist) entleert sich das eingelagerte Kältemittel-Volumen des weiteren Kältemittelsammlers 18 auf Grund der Druckdifferenz selbstständig über das Expansionsventil 16 auf die Niederdruckseite des Verdichters 1.

Als weitere Variante der vorstehend mit Bezugnahme auf die Figuren 1 bis 3 dargestellten Ausführungsbeispiele bzw. Beispiele ist anzuführen, dass auch der Verdampfer 5 nicht lediglich ein Kältemittel-Luft-Verdampfer zu sein braucht, sondern auch einen Kältemittel-Kühlmittel-Verdampfer sein kann, bei dem die Ladeluft indirekt über das Kühlmittel aufgeheizt bzw. gekühlt wird. In diesem Fall wird das Kühlmittel als Wärmepuffer verwendet, so dass eine kontinuierliche und gleichmäßige Erwärmung der Ansaugluft für den Verbrennungsmotor sichergestellt ist. Dies stelle eine gleichmäßigere Temperatur der Ansaugluft sicher, die wiederum eine Verbesserung der Emissionswerte bewirkt.

Durch den vorgeschlagenen Ansatz lässt sich nicht nur eine schnelle Aufheizung der Ansaugluft erreichen, sondern durch die flexible Ausgestaltung des Kältemittelkreislauf-Systems als Heizung und Kühler für die Ansaugluft des Verbrennungsmotors lässt sich auch eine Reduzierung der Emissionen und eine Reduzierung des Kraftstoffmehrverbrauchs erreichen. Zusätzlich können durch eine kompakte Baugruppe Herstellungskosten durch den Entfall von separaten Einheiten zum Heizen und Kühlen der Ansaugluft reduziert werden.

### Bezugszeichenliste

- 1: Verdichter
- 2: Kondensator
- 3: Käftemittelsammler
- 4: erstes Expansionsventil
- 5: (CAS-) Verdampfer zur Temperierung der Ansaugluft des Verbrennungsmotors
- 6: Temperatursensor des CAS-Verdampfers 5
- 7: Klimaanlagen-Verdampfer
- 8: zweites Expansionsventil
- 9: erstes Absperrventil
- 10: zweites Absperrventil
- 11: Ausblasfühler
- 12: erstes Rückschlagventil
- 13: erstes Umschaltventil
- 14: zweites Rückschlagventil
- 15: zweites Umschaltventil
- 16: weiteres Expansionsventil
- 17: weiteres Absperrventil
- 18: weitere Kältemittelsammler

## Patentansprüche

1. Vorrichtung zur Temperierung der Ansaugluft eines Verbrennungsmotors eines Transportmittels, wobei die Vorrichtung folgende Merkmale umfasst:
- ein Kältemittelkreislauf-System, das einen Klimaanlagen-Verdampfer (7) zum Kühlen oder Erhitzen einer Umgebungsluft für eine Passagierzelle des Transportmittels und ein Expansionsventil (4, 8, 16) zum Expandieren des Kältemittels umfasst;
- einen in dem Kältemittelkreislauf-System angeordneten Verdichter (1), wobei der Verdichter (1) einen Verdichter-Ausgang zum Abgeben von hoch-verdichtetem Kältemittel und einen Verdichter-Eingang zum Aufnehmen von niedrig-verdichtetem Kältemittel aufweist;
- einen in dem Kältemittelkreislauf-System angeordneten Verdampfer (5), der ausgebildet ist, um die Ansaugluft des Verbrennungsmotors zu temperieren, wobei der Verdampfer (5) einen Verdampfer-Eingang zum Aufnehmen des Kältemittels und einen Verdampfer-Ausgang zum Abgeben des Kältemittels aufweist und
wobei in dem Kältemittelkreislauf-System der Verdampfer-Eingang mit dem Verdichter-Ausgang und der Verdampfer-Ausgang über den Klimaanlagen-Verdampfer (7) mit dem Verdichter-Eingang verbindbar ist, oder
wobei in dem Kältemittelkreislauf-System der Verdampfer-Eingang mit dem Verdichter-Ausgang und der Verdampfer-Ausgang über ein Expansionsventil (16) mit dem Verdichter-Eingang verbindbar sind,
**dadurch gekennzeichnet, dass**
zwischen dem Verdichter und einem Kondensator (2), der stromabwärts des Verdichter-Ausgangs angeordnet ist, ein erstes Umschaltventil (13) und zwischen Verdampfer (5) und Verdichter (1) ein zweites Umschaltventil (15) angeordnet sind, wobei das erste Umschaltventil (13) einen Kältemittelfluss entweder vom Verdichter (1) zum Kondensator (2) oder vom Verdichter (1) über ein erstes Rückschlagventil (12) zu einem Eingang des Verdampfers (5) ermöglicht und das zweite Umschaltventil (15) entweder einen Kältemittelfluss vom Verdampfer (5) zum Verdichter (1) oder vom Ausgang des Verdampfers (5) über ein zweites Rückschlagventil (14) zum Eingang des Kondensators (2) ermöglicht.

2. Vorrichtung gemäß Anspruch 1, **dadurch gekennzeichnet, dass** in einem Betriebsmodus der Vorrichtung zur Temperierung, der Kondensator (2) mit dem Verdichter-Eingang verbindbar ist, der Verdampfer-Eingang mit dem Expansionsventil (4) oder dem Kondensator (2) verbindbar ist und der Verdampfer-Ausgang mit dem Verdichter-Eingang verbindbar ist.

3. Vorrichtung gemäß Anspruch 2, **dadurch gekennzeichnet, dass** das Kältemittelkreislauf-System eine Bypass-Leitung um den Klimaanlagen-Verdampfer (7) umfasst.

4. Vorrichtung gemäß Anspruch 1, **dadurch gekennzeichnet, dass** zwischen dem Verdichter-Ausgang und dem Verdampfer-Eingang ein Absperrventil (17) angeordnet ist.

5. Vorrichtung gemäß einem der Ansprüche 1 oder 4, **dadurch gekennzeichnet, dass** der Verdichter-Eingang ununterbrechbar über den Kondensator (2) mit einem Kältemittelsammler (3) verbunden ist.

6. Vorrichtung gemäß Anspruch 1, 4 oder 5, **dadurch gekennzeichnet, dass** zwischen dem Verdampfer-Ausgang und dem Verdichter-Eingang ein Expansionsventil (16) angeordnet ist.

7. Vorrichtung gemäß Anspruch 6, **dadurch gekennzeichnet, dass** das Expansionsventil (16) eine veränderbare Ventil-Querschnittsfläche aufweist.

8. Vorrichtung gemäß einem der Ansprüche 1 oder 4 bis 7, **dadurch gekennzeichnet, dass** zwischen dem Verdampfer-Ausgang und dem Expansionsventil (16) ein weiterer Kältemittelsammler (18) angeordnet ist.

9. Vorrichtung gemäß einem der Ansprüche 1 bis 8, **dadurch gekennzeichnet, dass** das Kältemittelkreislauf-System ein Absperrventil (10) umfasst, um einen Kältemittelfluss durch den Klimaanlagen-Verdampfer (7) zu verhindern.

10. Vorrichtung gemäß einem der Ansprüche 1 bis 9, **dadurch gekennzeichnet, dass** das Kältemittelkreislauf-System ausgebildet ist, um den Kältemittelfluss zyklisch derart zu steuern, dass der Verdampfer (5) in einem Betriebszustand zwischen den Verdichter (1) und den Kondensator (2) geschaltet ist und der Kondensator (2) in einem anderen Betriebszustand zwischen den Verdichter (1) und den Verdampfer (5) geschaltet ist. um den Kältemittelfluss zyklisch derart zu steuern, dass der Verdampfer (5) in einem Betriebszustand zwischen den Verdichter (1) und den Kondensator (2) geschaltet ist und der Kondensator (2) in einem anderen Betriebszustand zwischen den Verdichter (1) und den Verdampfer (5) geschaltet ist.

## Claims

1. An apparatus for controlling the temperature of the intake air of an internal combustion engine of a transport means, wherein the apparatus comprises the following features:
- a refrigerant circulation system comprising an air-conditioning evaporator (7) for cooling or heating an ambient air for a passenger compartment of the transport means and an expansion valve (4, 8, 16) for expanding the refrigerant;
- a compressor (1) arranged in the refrigerant circulation system, wherein the compressor (1) has a compressor outlet for discharging highly compressed refrigerant and a compressor inlet for receiving lowly compressed refrigerant;
- an evaporator (5) arranged in the refrigerant circulation system, which is configured to control the temperature of the intake air of the internal combustion engine, wherein the evaporator (5) comprises an evaporator inlet for receiving the refrigerant and an evaporator outlet for discharging the refrigerant, and
wherein, in the refrigerant circulation system, the evaporator inlet can be connected to the compressor outlet and the evaporator outlet can be connected to the compressor inlet via the air-conditioning evaporator (7), or
wherein, in the refrigerant circulation system, the evaporator inlet can be connected to the compressor outlet and the evaporator outlet can be connected to the compressor inlet via an expansion valve (16), **characterised in that**
a first switch valve (13) is arranged between the compressor and a condenser (2) which is arranged downstream of the compressor outlet and a second switch valve (15) is arranged between the evaporator (5) and the compressor (1), wherein the first switch valve (13) enables a refrigerant flow either from the compressor (1) to the condenser (2) or from the compressor (1) to an inlet of the evaporator (5) via a first check valve (12) and the second switch valve (15) enables a refrigerant flow either from the evaporator (5) to the compressor (1) or from the outlet of the evaporator (5) to the inlet of the condenser (2) via a second check valve (14).

2. The apparatus according to claim 1, **characterised in that** in an operating mode of the apparatus for controlling the temperature, the condenser (2) can be connected to the compressor inlet, the evaporator inlet can be connected to the expansion valve (4) or the condenser (2) and the evaporator outlet can be connected to the compressor inlet.

3. The apparatus according to claim 2, **characterised in that** the refrigerant circulation system comprises a bypass conduit around the air-conditioning evaporator (7).

4. The apparatus according to claim 1, **characterised in that** a stop valve (17) is arranged between the compressor outlet and the evaporator inlet.

5. The apparatus according to one of claims 1 or 4, **characterised in that** the compressor inlet is connected to a refrigerant collector (3) via the condenser (2) in an uninterruptible manner.

6. The apparatus according to claim 1, 4 or 5, **characterised in that** an expansion valve (16) is arranged between the evaporator outlet and the compressor inlet.

7. The apparatus according to claim 6, **characterised in that** the expansion valve (16) has a modifiable valve cross-sectional area.

8. The apparatus according to one of claims 1 or 4 to 7, **characterised in that** a further refrigerant collector (18) is arranged between the evaporator outlet and the expansion valve (16).

9. The apparatus according to one of claims 1 to 8, **characterised in that** the refrigerant circulation system comprises a stop valve (10) in order to prevent a refrigerant flow through the air-conditioning evaporator (7).

10. The apparatus according to one of claims 1 to 9, **characterised in that** the refrigerant circulation system is configured to cyclically control the refrigerant flow such that the evaporator (5) is switched to an operating state between the compressor (1) and the condenser (2) and the condenser (2) is switched to a different operating state between the compressor (1) and the evaporator (5).

## Revendications

1. Dispositif d'équilibrage de température de l'air d'admission d'un moteur à combustion interne d'un moyen de transport, où le dispositif comprend les caractéristiques suivantes :
- un système de circuit de fluide frigorigène qui comprend un évaporateur (7) d'un système de climatisation, ledit évaporateur servant au refroidissement ou au chauffage d'un air ambiant en circulation dans un espace pour passagers du moyen de transport, et qui comprend une vanne de détente (4, 8, 16) servant à la détente du fluide frigorigène ;
- un compresseur (1) disposé dans le système du circuit de fluide frigorigène, où le compresseur (1) présente une sortie de compresseur servant à fournir du fluide frigorigène fortement comprimé, et présente une entrée de compresseur servant à recevoir du fluide frigorigène faiblement comprimé ;
- un évaporateur (5) disposé dans le système du circuit de fluide frigorigène, évaporateur qui est conçu pour équilibrer la température de l'air d'admission du moteur à combustion interne, où l'évaporateur (5) présente une entrée d'évaporateur servant à recevoir le fluide frigorigène et une sortie d'évaporateur servant à fournir le fluide frigorigène, et
où, dans le système du circuit de fluide frigorigène, l'entrée de l'évaporateur peut être reliée à la sortie du compresseur, et la sortie de l'évaporateur peut être reliée à l'entrée du compresseur par l'évaporateur (7) du système de climatisation,
ou bien, dans le système du circuit de fluide frigorigène, l'entrée de l'évaporateur peut être reliée à la sortie du compresseur, et la sortie de l'évaporateur peut être reliée à l'entrée du compresseur par une vanne de détente (16),
**caractérisé**
**en ce qu'**une première vanne d'inversion (13) est disposée entre le compresseur et un condenseur (2) qui est disposé en aval de la sortie du compresseur, et une deuxième vanne d'inversion (15) est disposée entre l'évaporateur (5) et le compresseur (1), où la première vanne d'inversion (13) permet à un flux de fluide frigorigène de s'écouler soit à partir du compresseur (1) jusqu'au condenseur (2), soit à partir du compresseur (1) jusqu'à une entrée de l'évaporateur (5) via un premier clapet antiretour (12), et la deuxième vanne d'inversion (15) permet à un flux de fluide frigorigène de s'écouler soit à partir de l'évaporateur (5) jusqu'au compresseur (1), soit à partir de la sortie de l'évaporateur (5) jusqu'à l'entrée du condenseur (2) via un deuxième clapet antiretour (14).

2. Dispositif selon la revendication 1, **caractérisé en ce que**, au cours d'un mode de fonctionnement du dispositif d'équilibrage de température, le condenseur (2) peut être relié à l'entrée du compresseur, l'entrée de l'évaporateur peut être reliée à la vanne de détente (4) ou au condenseur (2), et la sortie de l'évaporateur peut être reliée à l'entrée du compresseur.

3. Dispositif selon la revendication 2, **caractérisé en ce que** le système du circuit de fluide frigorigène comprend une conduite de dérivation qui contourne l'évaporateur (7) du système de climatisation.

4. Dispositif selon la revendication 1, **caractérisé en ce qu'**une vanne d'arrêt (17) est disposée entre la sortie du compresseur et l'entrée de l'évaporateur.

5. Dispositif selon l'une des revendications 1 ou 4, **caractérisé en ce que** l'entrée du compresseur est reliée à un collecteur de fluide frigorigène (3) par un condenseur (2), de façon pouvant être ininterrompue.

6. Dispositif selon la revendication 1, 4 ou 5, **caractérisé en ce qu'**une vanne de détente (16) est disposée entre la sortie de l'évaporateur et l'entrée du compresseur.

7. Dispositif selon la revendication 6, **caractérisé en ce que** la vanne de détente (16) est une vanne présentant une surface de section modifiable.

8. Dispositif selon l'une quelconque des revendications 1 ou 4 à 7, **caractérisé en ce qu'**un autre collecteur de fluide frigorigène (18) est disposé entre la sortie de l'évaporateur et la vanne de détente (16).

9. Dispositif selon l'une quelconque des revendications 1 à 8, **caractérisé en ce que** le système du circuit de fluide frigorigène comprend une vanne d'arrêt (10) pour empêcher un flux de fluide frigorigène de circuler à travers l'évaporateur (7) du système de climatisation.

10. Dispositif selon l'une quelconque des revendications 1 à 9, **caractérisé en ce que** le système du circuit de fluide frigorigène est conçu pour réguler le flux de fluide frigorigène, de façon cyclique, de manière telle que l'évaporateur (5) soit commuté dans un état de fonctionnement entre le compresseur (1) et le condenseur (2), et que le condenseur (2) soit commuté dans un autre état de fonctionnement entre le compresseur (1) et l'évaporateur (5).
